# EUROPEAN PATENT SPECIFICATION

(11) **EP 2 406 138 B1**
(45) Date of publication and mention of the grant of the patent: **22.07.2015**
(21) Application number: 10751121.4
(22) Date of filing: 10.03.2010
(51) Int. Cl.: B65B 25/06, A23K 1/16, A23K 1/18

(54) **CHUNKS IN GRAVY FOOD COMPOSITIONS**
KLUMPEN IN SAUCENARTIGEN NAHRUNGSZUSAMMENSETZUNGEN
MORCEAUX DANS DES COMPOSITIONS DE SAUCE ALIMENTAIRE

(30) Priority: 11.03.2009 US 209748 P
(43) Date of publication of application: 18.01.2012
(73) Proprietor: Nestec S.A., 1800 Vevey (CH)
(72) Inventor: WATELAIN, Annie, F-80300 Lavieville (FR); FERNANDES, Paulo, F-80000 Amiens (FR)
(74) Representative: Rupp, Christian
(86) International application number: PCT/US2010/000720
(87) International publication number: WO 2010/104572

(56) References cited:
- WO-A2-2010/080144
- DE-A1- 3 714 361
- US-A- 4 369 125
- US-A1- 2006 134 090
- US-A1- 2008 160 164
- LOPES L ET AL: "Role of conformation and acetylation of xanthan on xanthan-guar interaction", CARBOHYDRATE POLYMERS, APPLIED SCIENCE PUBLISHERS, LTD. BARKING, GB, vol. 17, no. 2, 1 January 1992 (1992-01-01), pages 121-126, XP024147771, ISSN: 0144-8617, DOI: 10.1016/0144-8617(92)90105-Y [retrieved on 1992-01-01]

## Description

### CROSS REFERENCE TO RELATED APPLICATIONS

This application claims priority to U.S. Provisional Application Serial No. 61/209748 filed march 11, 2009.

### BACKGROUND OF THE INVENTION

### Field of the Invention

The invention relates generally to food compositions and particularly to chunks in gravy food compositions.

### Description of Related Art

Chunks in gravy food compositions are typically produced by making a fluid gravy using guar and xanthan as gum ingredients. The gravy is placed in a container and hot chunks (>70°C) are mixed with the fluid gravy. The chunks in gravy mixture is placed in a container, sealed, and retorted to produce a chunks in gravy food composition. During the process, the gravy should maintain a viscosity that supports the chunks and keeps the chunks evenly dispersed in the gravy. However, when the hot chunks are mixed with the gravy, the guar gum breaks down and the gravy loses its viscosity. This loss of viscosity causes the gravy to lose its ability to keep the chunks uniformly dispersed in the gravy. The chunks typically settle toward the bottom of the container. When this happens, the resulting chunks in gravy composition has an uneven chunk distribution with an unappealing appearance. There is, therefore, a need for new chunks in gravy food compositions that have an even and appealing distribution of chunks in the composition. WO 2010/080144 discloses a chunks in jelly food composition comprising chunks in jelly in a chunks to jelly ratio of from about 25:75 to about 60:40, wherein the jelly comprises from about 0.01 to about 1% gellan, from about 0.01 to about 1% deacetylated xanthan, and from about 0.01 to about 1% chelating agent. The jelly maintains its viscosity during the manufacturing process and ensures an even distribution of the chunks in the chunks in jelly food composition. DE 3714361 discloses the use of a gel system, produced by treating guar with alpha-galactosidase and mixing the reaction product with carageenan and/or xanthan to produce pet food, in particular cat food and dog food. A document "Role of conformation and acetylation of xanthan on xanthan-guar interaction" by Lopes (Carbohydrate Polymers, Vol. 17, No. 2, pp 121-126) describes the effects of mixing xanthan and guar solutions. The Lopes document discloses that there is a stronger interaction between deacetylated xanthan and guar than native xanthan and guar because of enhanced xanthan-guar gum backbone association in the former case. US 4369125 discloses gelling compositions having a base of galactomannan and xanthan. US 4369125 discloses a method for obtaining gelling compositions wherein the xanthan is subjected to deacetylation before being mixed with galactomannan.

### SUMMARY OF THE INVENTION

It is, therefore, an object of the present invention to provide new chunks in gravy food compositions.

It is a further object of the invention to provide new gravy compositions useful for producing chunks in gravy food compositions.

It is another object of the invention to provide chunks in gravy food compositions with improved digestibility.

It is a further object of the invention to provide methods for improving fecal quality and consistency for animals consuming chunks in gravy food compositions.

One or more of these or other objects are achieved using novel chunks in gravy food compositions comprising chunks in gravy in a chunks to gravy ratio of from 25:75 to 60:40, wherein the gravy comprises from 0.1 to 0.2 % guar and from 0.1 to 0.2 % deacetylated xanthan. The use of this novel combination of gums in the required amounts produces a gravy that maintains its viscosity throughout the manufacturing process. The resulting chunks in gravy food compositions have an appealing appearance and desirable palatability based upon a relatively even distribution of chunks in the composition. In addition, the novel chunks in gravy food compositions have a beneficial affect on fecal quality and consistency based upon a reduction in the total amount of gums in the food composition and have an improved digestibility compared to prior art chunk in gravy food compositions because of the reduced amount of gums in the food compositions.

Other and further objects, features, and advantages of the present invention will be readily apparent to those skilled in the art.

### DETAILED DESCRIPTION OF THE INVENTION

### Definitions

The term "food composition" means a product or composition that is intended for ingestion by an animal.

The term "animal" means any animal that could benefit from or enjoy the consumption of the food compositions of the present invention, including human, avian, bovine, canine, equine, feline, hicrine, lupine, murine, ovine, or porcine animals.

The term "companion animal" means domesticated animals such as cats, dogs, rabbits, guinea pigs, ferrets, hamsters, mice, gerbils, horses, cows, goats, sheep, donkeys, pigs, and the like.

All percentages expressed herein are by weight of the total weight of the composition unless expressed otherwise:

All ratios expressed herein are on a weight:weight (w/w) basis unless expressed otherwise.

Ranges are used herein as shorthand to avoid having to list and describe each and every value within the range. Any appropriate value within the range can be selected, where appropriate, as the upper value, lower value, or the terminus of the range.

As used herein, the singular form of a word includes the plural, and vice versa, unless the context clearly dictates otherwise. Thus, the references "a", "an", and "the" are generally inclusive of the plurals of the respective terms. For example, reference to "a supplement", "a method", or "a food" includes a plurality of such "supplements", "methods", or "foods." Similarly, the words "comprise", "comprises", and "comprising" are to be interpreted inclusively rather than exclusively. Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive.

The methods and compositions and other advances disclosed herein are not limited to particular methodologies, protocols, and reagents because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

All patents, patent applications, publications, technical and/or scholarly articles, and other references cited or referred to herein by reference to the extent allowed by law. The discussion of those references is intended merely to summarize the assertions made therein. No admission is made that any such patents, patent applications, publications or references, or any portion thereof, are relevant, material, or prior art. The right to challenge the accuracy and pertinence of any assertion of such patents, patent applications, publications, and other references as relevant, material, or prior art is specifically reserved.

### The Invention

In one aspect, the invention provides chunks in gravy food compositions. The compositions comprise chunks in gravy in a chunks to gravy ratio of from 25:75 to 60:40, wherein the gravy comprises from 0.1 to 0.2 % guar and from 0.1 to 0.2 % deacetylated xanthan. In most embodiments, the gravy comprises from 90% to 98% water.

In various embodiments, the chunks to gravy ratio is 30:70, 35:65, 40:60, 45:55, 50:50, and 55:45. Preferably, the chunks to gravy ratio is ratio of 35:65, most preferably 45:55.

In preferred embodiments, the gravy comprises from 90% to 98% water.

The chunks can be any suitable chunks known to skilled artisans. Any real meat chunk, real fish chunk, meat analog chunk, vegetable chunk, or combinations thereof are useful in the present invention. The chunks can contain meat, meat by-products, cereals, vegetable protein extracts, and the like. Chunk compositions and method for manufacturing chunks useful in the present invention are described in US5132137, US5567466, US6436463 (EP1294237B1), US4781939, US6379738, and US7344745. The chunks vary in size depending upon the animal that will consume the product, *e.g*., the type, age, health, or size of the animal. For example, chunk sizes suitable for dogs typically range from about 10 to 80 millimeters (mm), preferably 20 to 40 mm, on the longest side. Chunk sizes for cats typically range from 3 to 30 mm, preferably 8 to 20 mm, on the longest side.

In various embodiments, the compositions of the present invention comprise additional ingredients such as vitamins, minerals, amino acids, nucleic acids, fillers, palatability enhancers, binding agents, flavors, stabilizers, emulsifiers, sweeteners, colorants, buffers, salts, coatings, condiments, preservatives, and the like known to skilled artisans. Non-limiting examples of supplementary minerals include calcium, phosphorous, potassium, sodium, iron, chloride, boron, copper, zinc, magnesium, manganese, iodine, selenium, and the like. Non-limiting examples of supplementary vitamins include vitamin A, any of the B vitamins, vitamin C, vitamin D, vitamin E, and vitamin K, including various salts, esters, or other derivatives of the foregoing. Additional dietary supplements may also be included, for example, any form of niacin, pantothenic acid, inulin, folic acid, biotin, amino acids, and the like, as well as salts and derivatives thereof. Stabilizers include substances that tend to increase the shelf life of the composition such as preservatives, synergists and sequestrants, packaging gases, emulsifiers, thickeners, gelling agents, and humectants. Examples of emulsifiers and/or thickening agents include gelatin, cellulose ethers, starch, starch esters, starch ethers, and modified starches. Selection of the ingredients and their amounts is known to skilled artisans. Specific amounts for each additional ingredient will depend on a variety of factors such as the ingredient included in the composition; the species of animal; the animal's age, body weight, general health, sex, and diet; the animal's consumption rate; the purpose for which the food compositions is being administered to the animal; and the like. Therefore, the component and ingredient amounts may vary widely and may deviate from the preferred proportions described herein.

In other embodiments, the food compositions are formulated to provide "complete and balanced" nutrition for an animal, preferably a companion animal, according to standards established by the Association of American Feed Control Officials (AAFCO). In other embodiments, the food compositions are formulated as a companion animal food composition, including a dog or cat food composition.

In various embodiments, the animal is a companion animal, preferably a dog or a cat, most preferably a dog.

The invention is based upon the discovery that a unique combination of gums in specific amounts can provide a gravy with a viscosity that keeps the chunks evenly distributed in the gravy during the manufacturing process required to produce a chunks in gravy food composition, typically from 3 to 4 Pascal Second (3000 to 4000 centipoises). This unique combination of gums in the required amounts maintains the viscosity required to ensure that the chunks are evenly distributed in the food composition. Further, the chunks in gravy food compositions of the invention contain less total gums than comparable prior art chunks in gravy food compositions. Less gum mean that the food compositions are more digestible and therefore produce improved fecal quality and consistency for animals consuming the compositions. Similarly, the chunks in gravy food compositions have equal or improved palatability when compared to compatible prior art compositions.

For example, prior art chunks in gravy food compositions can be made using a combination of ingredients such as those shown in Table 1.

**Table 1**

| Ingredients | % |
|---|---|
| Xanthan (Standard) | 0.06 |
| Guar Gum | 0.56 |
| Flavoring system | 1.50 |
| Water | 97.88 |

These prior art food compositions often have an uneven distribution of chunks in the gravy because guar breaks down and decreases in viscosity when hot chunks were mixed with the gravy. The viscosity of the gravy before addition of the hot chunks is about 3 to 4 Pascal Second (3000 to 4000 centipoises). After addition of the hot chunks, the viscosity drops to about 0.5 Pascal Second (500 centipoises). This lower viscosity caused by addition of the hot chunks permits the chunks to move around in the gravy and become unevenly distributed within the gravy.

If the amount of guar and xanthan are altered as shown in Table 2 in an attempt to produce a gravy that maintains its viscosity, the composition fails to maintain the required viscosity and produces a composition with uneven chunk distribution. The viscosity of the gravy before addition of the hot chunks is about 0.4 Pascal Second (400 centipoises). This viscosity is insufficient to produce a product with a uniform chunk distribution, even before the hot chunks are added.

**Table 2**

| Ingredients | % |
|---|---|
| Xanthan (Standard) | 0.15 |
| Guar Gum | 0.15 |
| Flavoring system | 1.50 |
| Water | 98.20 |

However, if the xanthan is replaced with deacetylated xanthan as shown in Table 3, the formulation develops the required viscosity before addition of the chunks and maintains the required viscosity after addition of the hot chunks. The viscosity of the gravy before addition of the hot chunks is about 3 to 4 Pascal Second (3000 to 4000 centipoises). After addition of the hot chunks, the viscosity remains about 3 to 4 Pascal Second (3000 to 4000) centipoises. This viscosity supports the chunks and allows a product with a relatively even distribution of chunks to be produced.

**Table 3**

| Ingredients | % |
|---|---|
| Deacetylated Xanthan | 0.15 |
| Guar Gum | 0.15 |
| Flavoring system | 1.50 |
| Water | 98.20 |

Therefore, the unique combination of gums in the amounts shown for the invention produces a gravy that maintains its viscosity throughout the process used to produce the chunks in gravy food compositions, including when hot chunks are mixed with the gravy. The viscosity of the gravy before addition of the hot chunks is about 3 to 4 Pascal Second (3000 to 4000 centipoises). After addition of the hot chunks, the viscosity remains about 3 to 4 Pascal Second (3000 to 4000 centipoises). This viscosity supports the chunks and allows a product with a relatively even distribution of chunks to be produced. Further, the total amount of gum is less compared to the prior art compositions; 0.3% compared to 0.62%. The resulting chunks in gravy food compositions have only about one-half of the quantity of gum in prior art compositions. As a result, the food compositions of the present invention are more digestible and therefore produce improved fecal scores that show that the food compositions improve fecal quality and consistency. Similarly, the chunks in gravy food compositions have equal or improved palatability when compared to compatible prior art compositions.

The chunks in gravy food compositions of the present invention can be prepared by adding the guar, xanthan, amino acid, sugar, salt, trisodium pyrophosphate, and caramel to water at room temperature (RT) (about 15 to 20°C) while continuously stirring with a high speed mixer for about 2 minutes at about 3000 rpm. The resulting viscosity of the gravy solution is from about 3 to 4 Pascal Second (3000 to 4000 cps). The gravy solution is mixed with hot chunks, sealed in a container, retorted, and cooled to produce a chunks in gravy food composition with a uniform distribution of chunks. Similar processes are known to skilled artisans.

In another aspect, the invention provides methods for improving the digestibility of chunks in gravy food compositions compared to prior art chunks in gravy food compositions. The methods comprise manufacturing chunks in gravy food composition using a gravy comprising 0.1 to 0.2 % guar and from 0.1 to 0.2 % deacetylated xanthan. Typically the gravy comprises from 90% to 98% water. The lower total amount of gums in the composition compared to prior art compositions makes the composition more digestible.

In another aspect, the invention provides methods for improving fecal quality and consistency for animals consuming chunks in gravy food compositions compared to prior art chunks in gravy food compositions. The methods comprise feeding the animal a chunks in gravy food composition comprising chunks in gravy in a chunks to gravy ratio of from 25:75 to 60:40, wherein the gravy comprises 0.1 to 0.2 % guar, from 0.1 to 0.2 % deacetylated xanthan, and from 90% to 98% water. The lower total amount of gums in the composition compared to prior art compositions result in an improved fecal quality and consistency for animals consuming the novel chunks in gravy food compositions. Fecal quality (fecal scores) and consistency can be determined by methods known to skilled artisans. For example, fecal scores can be based upon the following characteristics: 1 - no diarrhea; 2 -semi-solid feces with no blood; 3 - watery diarrhea without dark or bloody feces; 4 - blood-tinged feces, loose or formed; and 5 - profuse diarrhea with frank blood or dark tarry feces. Another system, the preferred one used herein, is: 1 - hard and dry; 2 -firm but not hard; 3 - solid cylindrical rope with moist surface; 4 - very moist surface but still ropelike; 5 - Very moist with visible ropes in piles; 6 - wet mass that occurs as a pile without the rope definition; and 7 - watery, runny flat puddles. Scores of 1 - 4 were acceptable and 5 - 7 were unacceptable.

In another aspect, a means for communicating information about or instructions for one or more of (1) the digestibility of the chunks in gravy food compositions of the present invention, (2) using the chunks in gravy food compositions to improve fecal quality and consistency for an animal consuming the food compositions; (3) instructions for feeding the chunks in gravy food compositions to an animal; (4) contact information for consumers to use if they have a question about the chunks in gravy food compositions or their use; and (5) nutritional information about the chunks in gravy food compositions. Useful instructions can include feeding amounts and frequency. The communication means is useful for instructing on the benefits of using the present invention and communicating the approved methods for feeding the food compositions to an animal. The means comprises one or more of a physical or electronic document, digital storage media, optical storage media, audio presentation, audiovisual display, or visual display containing the information or instructions. Preferably, the means is selected from the group consisting of a displayed website, a visual display kiosk, a brochure, a product label, a package insert, an advertisement, a handout, a public announcement, an audiotape, a videotape, a DVD, a CD-ROM, a computer readable chip, a computer readable card, a computer readable disk, a USB device, a FireWire device, a computer memory, and any combination thereof.

In another aspect, a package comprising a chunks in gravy food composition of the present invention and a label affixed to the package containing a word or words, picture, design, acronym, slogan, phrase, or other device, or combination thereof that indicates that the contents of the package contains a chunks in gravy food composition with beneficial properties such as even chunk distribution, improved fecal quality and consistency, and improved digestibility. Typically, such device comprises the words "improves fecal quality", "improves fecal consistency", "improved digestibility", or an equivalent expression printed on the package. Any package or packaging material suitable for containing the composition is useful in the invention, e.g., bag, box, bottle, can, pouch, and the like manufactured from paper, plastic, foil, metal, and the like. In a preferred embodiment, the package contains a food composition adapted for a particular animal such as a human, canine, or feline, as appropriate for the label, preferably a companion animal food composition for dogs or cats. In a preferred embodiment, the package is a retortable can or pouch comprising a chunks in gravy food composition of the present invention.

### EXAMPLES

The invention can be further illustrated by the following examples, although it will be understood that these examples are included merely for purposes of illustration and are not intended to limit the scope of the invention unless otherwise specifically indicated.

### Example 1

Chunks having the ingredients shown in Table 4 were manufactured by grinding the meat and meat by-products to sizes less than 12 mm with a meat grinder. Chicken, pork liver, wheat flour, and wheat gluten were ground in a standard meat grinder for 10 minutes at 1000 turns per minute. The meats were then mixed in a paddle blender with the other dry ingredients and water was added to obtain a homogenous elastic paste. The paste was then emulsified with a Karl Schnell Emulsifier. The emulsified paste was then pumped through dies to form ropes. The extruded ropes were treated with continuous hot air and steam to obtain a core temperature of between 80 and 95°C. The thermoset ropes were sliced into slabs at the outlet of the oven. These were then diced to an appropriate size of about 8 to 20 mm on the long side using an Urschel dicer.

**Table 4**

| Ingredients | % |
|---|---|
| Chicken (carcass) and Meat By-Products | 70.00 |
| Cereal | 18.00 |
| Dries | 3.00 |
| Water | 9.00 |

A gravy (control gravy) having the ingredients shown in Table 5 was manufactured using a Karl Schnell B22 mixer. Water at room temperature was weighed and poured into the mixer. The agitator was then set for 3000 rpm. The dry ingredients were added with continuous agitation for about 3 minutes and the solids were homogenously dispersed. The viscosity obtained was 3.5 Pascal Second (3500 cps), (Brookfield RVT, 20 rpm) and shown in Table 7.

**Table 5**

| Ingredients | % |
|---|---|
| Xanthan (Standard) | 0.06 |
| Guar Gum | 0.56 |
| Flavoring system | 1.50 |
| Water | 97.88 |

A gravy (test gravy) having the ingredients shown in Table 6 was manufactured using a Karl Schnell B22 mixer. Water at room temperature was weighed and poured into the mixer. The agitator was then set for 3000 rpm. The dry ingredients were added with continuous agitation for about 3 minutes and the solids were homogenously dispersed. The viscosity obtained was 3.5 Pascal Second (3500 cps), (Brookfield RVT, 20 rpm) and shown in Table 7.

**Table 6**

| Ingredients | % |
|---|---|
| Deacetylated Xanthan | 0.15 |
| Guar Gum | 0.15 |
| Flavoring system | 1.50 |
| Water | 98.20 |

Each gravy was transferred to vacuum filler and added to pouches, 50 grams of gravy per pouch. 45 grams of hot chunks (70 to 85°C) were added to the gravy in the pouch. The pouches were then vacuum sealed and retorted by heating to 130°C over 15 minutes; kept at 130°C for 20 minutes; and cooled to 50°C in 15 minutes. The pouches were allowed to cool for at room temperature for 2 hours. The pouches were opened and the resulting chunks in gravy food compositions were compared for chunk distribution. In the composition with the control gravy, the chunks had the appearance of settling out from the gravy. There was an upper layer of pure gravy and a lower layer where the chunks were concentrated. In the composition with the test gravy, the chunks were evenly distributed throughout the cooled gravy.

### Example 2

The control gravy and test gravy described in Example 1 were compared to test their viscosity. All viscosity data were obtained at sample temperature of 20°C using a Brookfield RVT viscometer. The same spindle at 20 rpm was used for all measurements. Results are shown in Table 7. Referring to Table 7, it is clear that the control gravy composition breaks down and loses about 86% of its original viscosity on contact with the hot chunks. The control gravy did not keep the chunks in suspension until the gravy sets. The new gravy composition on the other hand only lost about 15% of its original viscosity on contact with the hot chunks. This was enough to keep the chunks in suspension until the liquid composition set to the gravy and hence maintained the even distribution of the chunks.

**Table 7**

| | Control Gravy | Test Gravy |
|---|---|---|
| Viscosity Before Chunk Addition (RT) | 3500 cps | 3500 cps |
| Viscosity After Hot Chunk Addition (70°C) | 500 cps | 3000 cps |

### Example 3

The chunks in gravy product having the control gravy and the test gravy were compared for fecal quality and consistency. Each diet was fed to a panel of at least 8 healthy adult cats with enough food to meet their nutritional requirements daily for 11 days. Feces from each animal was evaluated daily and scored as follows: 1 - hard and dry; 2 -firm but not hard; 3 - solid cylindrical rope with moist surface; 4 - very moist surface but still ropelike; 5 - Very moist with visible ropes in piles; 6 - wet mass that occurs as a pile without the rope definition; and 7 - watery, runny flat puddles. Scores of 1 - 4 were acceptable and 5 - 7 were unacceptable. The results are shown in Table 8.

**Table 8**

| | Control Gravy | Test Gravy |
|---|---|---|
| Total Hydrocolloid in the gravy | 0.62% | 0.30% |
| Digestibility Measured by Fecal Consistency | 70% | 95% |
| | Not Acceptable | Very good |

Referring to Table 8, the results show a clear improvement in fecal quality and consistency (digestibility) for the test chunk in gravy composition

In the specification, there have been disclosed typical preferred embodiments of the invention. Although specific terms are employed, they are used in a generic and descriptive sense only and not for purposes of limitation. The scope of the invention is set forth in the claims. Obviously many modifications and variations of the invention are possible in light of the above teachings. It is therefore to be understood that within the scope of the appended claims, the invention may be practiced otherwise than as specifically described.

## Claims

1. A chunks in gravy food composition comprising chunks in gravy in a chunks to gravy ratio of from 25:75 to 60:40, wherein the gravy comprises from 0.1 to 0.2% guar and from 0.1 to 0.2% deacetylated xanthan.

2. The food composition of claim 1 formulated to provide complete and balanced nutrition for an animal.

3. The food composition of claim 2 wherein the animal is a companion animal.

4. The food composition of claim 3 wherein the animal is a dog or a cat.

5. A gravy composition suitable for use in chunks in gravy food compositions comprising from 0.1 to 0.2% guar and from o. 1 to 0.2% deacetylated xanthan.

6. A method for improving fecal quality and consistency for animals consuming chunks in gravy food compositions comprising feeding the animal a chunks in gravy food composition comprising chunks in gravy in a chunks to gravy ratio of from 25:75 to 60:40, wherein the gravy comprises from 0.1 to 0.2% guar and from 0.1 to 0.2% deacetylated xanthan.

## Patentansprüche

1. Stücke in einer soßenartigen Nahrungszusammensetzung mit Stücken in einer Soße in einem Verhältnis Stücke zu Soße von 25:75 bis 60:40, wobei die Soße von 0,1 bis 0,2% Guar und von 0,1 bis 0,2% deacetyliertes Xanthan aufweist.

2. Nahrungszusammensetzung nach Anspruch 1, die formuliert ist, um eine vollwertige und ausgewogene Nahrung für ein Tier bereitzustellen.

3. Nahrungszusammensetzung nach Anspruch 2, wobei das Tier ein Haustier ist.

4. Nahrungszusammensetzung nach Anspruch 3, wobei das Tier ein Hund oder eine Katze ist.

5. Soßenzusammensetzung, die geeignet ist zur Verwendung bei Stücken in soßenartigen Nahrungszusammensetzungen, aufweisend von 0,1 bis 0,2% Guar und von 0,1 bis 0,2% deacetyliertes Xanthan.

6. Verfahren zur Verbesserung der Stuhlqualität und -konsistenz bei Tieren, die Stücke in soßenartigen Nahrungszusammensetzungen verspeisen, aufweisend das Füttern des Tieres mit Stücken in einer soßenartigen Nahrungszusammensetzung mit Stücken in der Soße in einem Verhältnis Stücke zu Soße von 25:75 bis 60:40, wobei die Soße von 0,1 bis 0,2% Guar und von 0,1 bis 0,2% deacetyliertes Xanthan aufweist.

## Revendications

1. Composition alimentaire à morceaux en sauce comprenant des morceaux dans de la sauce selon un rapport morceaux sur sauce allant de 25:75 à 60:40, dans laquelle la sauce comprend de 0,1 à 0,2% de guar et de 0,1 à 0,2% de xanthane désacétylé.

2. Composition alimentaire selon la revendication 1 formulée pour fournir une nutrition complète et équilibrée pour un animal.

3. Composition alimentaire selon la revendication 2, l'animal étant un animal de compagnie.

4. Composition alimentaire selon la revendication 3, l'animal étant un chien ou un chat.

5. Composition de sauce appropriée pour une utilisation dans des compositions alimentaires à morceaux en sauce comprenant de 0,1 à 0,2% de guar et de 0,1 à 0,2% de xanthane désacétylé.

6. Procédé pour améliorer la qualité et la consistance fécales pour des animaux consommant des compositions alimentaires à morceaux en sauce comprenant l'alimentation de l'animal avec une composition alimentaire à morceaux en sauce comprenant des morceaux dans de la sauce selon un rapport morceaux sur sauce allant de 25:75 à 60:40, dans lequel la sauce comprend de 0,1 à 0,2% de guar et de 0,1 à 0,2% de xanthane désacétylé.
